# EUROPÄISCHE PATENTSCHRIFT

(11) **EP 2 534 739 B1**
(45) Veröffentlichungstag und Bekanntmachung des Hinweises auf die Patenterteilung: **20.07.2016**
(21) Anmeldenummer: 11703855.4
(22) Anmeldetag: 07.02.2011
(51) Int. Cl.: H02B 13/035, H01H 9/52

(54) **ELEKTRISCHES SCHALTGERÄT**
ELECTRIC SWITCHING DEVICE
APPAREIL DE COMMUTATION ÉLECTRIQUE

(30) Priorität: 09.02.2010 DE 102010007691
(43) Veröffentlichungstag der Anmeldung: 19.12.2012
(73) Patentinhaber: Siemens Aktiengesellschaft, 80333 München (DE)
(72) Erfinder: LÜTHY, Norbert, 13591 Berlin (DE); MAGIER, Tomasz, 91330 Eggolsheim (DE); MEINHERZ, Manfred, 13467 Berlin (DE); RÜTHNICK, Clemens, 14532 Kleinmachnow (DE)
(86) Internationale Anmeldenummer: PCT/EP2011/051712
(87) Internationale Veröffentlichungsnummer: WO 2011/098416

(56) Entgegenhaltungen:
- EP-A1- 1 569 254
- EP-A2- 0 744 803
- CH-A- 556 610
- DE-A1- 2 051 151
- JP-A- 50 064 774
- JP-U- 50 063 130
- JP-U- 53 011 059
- JP-U- 53 086 575

## Beschreibung

Die Erfindung bezieht sich auf ein elektrisches Schaltgerät mit einer eine erste Anschlussleitung und eine zweite Anschlussleitung aufweisenden Unterbrechereinheit und mit einem fluiddichten Kapselungsgehäuse, welches die Unterbrechereinheit umgibt und mit einem elektrisch isolierenden Fluid befüllt ist, sowie mit einem die Unterbrechereinheit zumindest teilweise umgebenden Schirmungsgehäuse, wobei die erste Anschlussleitung zumindest einen Strömungskanal für das Fluid aufweist, welcher mit einer ersten Mündungsöffnung innerhalb des Schirmungsgehäuses mündet und mit einer zweiten Mündungsöffnung außerhalb des Schirmungsgehäuses mündet.

Ein derartiges elektrisches Schaltgerät ist beispielsweise aus der JP 53-86575 bekannt. Dort ist ein elektrisches Schaltgerät beschrieben, welches über eine erste Anschlussleitung verfügt, welche mit einer ersten Mündungsöffnung innerhalb eines Schirmgehäuses mündet und mit einer zweiten Mündungsöffnung außerhalb des Schirmgehäuses mündet. Um eine intensive Durchflutung der ersten Anschlussleitung mit einem elektrisch isolierenden Fluid zu gewährleisten, ist eine Wandung der ersten Anschlussleitung von mehreren radial ausgerichteten Ausnehmungen durchbrochen. Die Nutzung derartiger Ausnehmungen ist beispielsweise auch aus der JP 50-64774 sowie aus der DE 2 051 151 bekannt. Zwar wird einerseits eine verbesserte Durchströmung der ersten Anschlussleitung erzielt. Andererseits wird durch eine radial ausgerichtete Ausnehmung der zur Stromführung zur Verfügung stehende Querschnitt der ersten Anschlussleitung reduziert. So wird eine verbesserte Kühlung der ersten Anschlussleitung erreicht, wobei die Strombelastbarkeit der ersten Anschlussleitung durch die Querschnittsreduzierung eingeschränkt wird. Weiterhin ist aus der JP 50-63130 ein elektrisches Schaltgerät bekannt, bei welchem zur verbesserten Durchströmung einer ersten Anschlussleitung mit einem elektrisch isolierenden Fluid eine maschinelle Strömungsunterstützung vorgesehen ist.

Ein elektrisches Schaltgerät ist beispielsweise aus der europäischen Patentanmeldung EP 0 744 803 A2 bekannt. Dort ist ein elektrisches Schaltgerät als Trenner für eine metallgekapselte gasisolierte Schaltanlage beschrieben. Der dortige Trenner weist eine Unterbrechereinheit mit einer ersten und einer zweiten Anschlussleitung auf. Die Unterbrechereinheit ist innerhalb eines fluiddichten Kapselungsgehäuses angeordnet. Das Innere des Kapselungsgehäuses ist mit einem elektrisch isolierenden Fluid befüllt. Weiterhin ist die Unterbrechereinheit mit einem Schirmungsgehäuse umgeben, welches der Unterbrechereinheit eine dielektrisch günstige Gestalt verleiht.

Das Kapselungsgehäuse verhindert ein Austreten des elektrisch isolierenden Fluides. Dadurch ist es möglich, das Volumen an nötigem elektrisch isolierenden Fluid zu begrenzen und vergleichsweise kostenaufwändige.Fluide zur elektrischen Isolation einzusetzen.

Die Unterbrechereinheit mit ihren beiden Anschlussleitungen ist regelmäßig von elektrischen Strömen durchflossen, die entsprechende Strom-Wärme-Effekte hervorrufen. Das abgeschlossene elektrisch isolierende Fluid ist nur in begrenztem Maße in der Lage, diese Wärme aufzunehmen und weiterzuleiten.

Einerseits ist es erwünscht, die räumlichen Ausdehnungen derartiger Kapselungsgehäuse zu reduzieren und den Bedarf an elektrisch isolierendem Fluid zu reduzieren. Jedoch hat dies zur Folge, dass ein möglicher Wärmeeintrag in das elektrische isolierende Fluid ebenfalls reduziert wird. Eine Abgabe von Wärme an das Kapselungsgehäuse über das elektrisch isolierende Fluid ist auch nur in einem begrenzten Maße möglich. Um eine unzulässige Überhitzung der Unterbrechereinheit zu verhindern, ist eine Begrenzung der Strombelastung der Unterbrechereinheit vorzunehmen.

Daher ist es Aufgabe der Erfindung, ein elektrisches Schaltgerät anzugeben, welches bei kompakten Abmessungen einer größeren Strombelastung ausgesetzt werden kann.

Erfindungsgemäß wird die Aufgabe bei einem elektrischen Schaltgerät der eingangs genannten Art dadurch gelöst, dass die erste Anschlussleitung an einem buchsenförmigen Kupplungsstück endet, welches zumindest eine radial ausgerichtete Ausnehmung aufweist, wobei die erste Anschlussleitung nach Art eines Steckkontaktes in eine Buchsenöffnung des Kupplungsstückes eingeführt ist.

Wird die erste Anschlussleitung mit einem Strömungskanal ausgestattet, so ist es möglich, aus dem Innern des Schirmungsgehäuses Fluid herauszuleiten und dieses Fluid außerhalb des Schirmungsgehäuses in das Kapselungsgehäuse austreten zu lassen. Somit ist es möglich, im inneren Bereich der Unterbrechereinheit befindliches Fluid in verbesserter Weise abzuführen und damit auch Wärme aus diesen Zentralbereichen der Unterbrechereinheit fortzuleiten. Im Innern der Unterbrechereinheit befinden sich Strompfade, welche die beiden Anschlussleitungen miteinander verbinden, so dass auch im Innern der Unterbrechereinheit ein Stromfluss zu verzeichnen ist. Aufgrund des Schirmungsgehäuses kann dieser Bereich von dem elektrischen Fluid nicht frei umströmt werden, wodurch es dort zu einer verstärkten Erwärmung kommt. Der Strömungskanal kann nunmehr gezielt eine Strömung im Innern des Schirmungsgehäuses unterstützen.

Dabei kann das Schirmungsgehäuse derart ausgestaltet sein, das dieses zumindest teilweise auch die Funktion einer Anschlussleitung übernimmt. Es kann jedoch auch vorgesehen sein, dass das Schirmungsgehäuse lediglich mit einem elektrischen Potential zumindest einer oder beider Anschlussleitung(en) beaufschlagbar ist, um eine elektrische Schirmwirkung hervorzurufen. Ein Stromfluss kann unabhängig von dem Schirmungsgehäuse von der ersten zu der zweiten Anschlussleitung oder umgekehrt von der zweiten zu der ersten Anschlussleitung der Unterbrechereinheit erfolgen. Zwischen der ersten und der zweiten Anschlussleitung der Unterbrechereinheit ist eine Schaltstrecke ausgebildet, d. h., es kann mittels der Unterbrechereinheit eine Potentialtrennung zwischen der ersten und der zweiten Anschlussleitung hervorgerufen werden. Somit ist es möglich, einen durch die Unterbrechereinheit laufenden Strompfad zu unterbrechen oder diesen Strompfad wieder herzustellen.

Das Schirmungsgehäuse hat dabei die Aufgabe, der Unterbrechereinheit zumindest abschnittsweise eine dielektrisch günstige Hüllkontur zu verleihen.

Das fluiddichte Kapselungsgehäuse ist elektrisch leitend ausgestaltet und mit Erdpotential beaufschlagt. Im Gegensatz dazu sind die Anschlussleitungen sowie das Schirmungsgehäuse mit einem wesentlich höheren elektrischen Potential, beispielsweise von mehreren 1.000 oder mehreren 100.000 Volt beaufschlagbar. Zwischen Innenwandflächen des Kapselungsgehäuses, welche ein Austreten des elektrisch isolierenden Fluides aus dem Kapselungsgehäuse verhindern und den innerhalb des Kapselungsgehäuses befindlichen Baugruppen, welche eine gegenüber dem Kapselungsgehäuse höheres elektrisches Potential aufweisen, entstehen aufgrund der Potentialdifferenz elektrische Felder, welche das elektrisch isolierende Fluid dielektrisch belasten. Mit Erhöhen der Betriebsspannung kann es zu Entladungen innerhalb des elektrisch isolierenden Fluides kommen.

Das elektrisch isolierende Fluid ist in Abhängigkeit der Umgebungsbedingungen, d. h., insbesondere von der Dichte des elektrisch isolierenden Fluides, die im Wesentlichen durch den Druck des Fluides im Innern des Kapselungsgehäuses und die vorherrschende Temperatur bestimmt wird, abhängig. Weiterhin kann durch die Wahl eines geeigneten elektrischen Fluides auf kurzen Strecken eine hohe Durchschlagsfestigkeit des elektrisch isolierenden Fluids erzielt werden. Insbesondere haben sich dabei Gase wie Schwefelhexafluorid, Stickstoff oder Gemische aus Schwefelhexafluorid und Stickstoff als wirksam erwiesen. Das elektrisch isolierende Fluid kann im Innern des Kapselungsgehäuses mit einem Druck von mehreren bar beaufschlagt werden, so dass der Druck im Innern des Kapselungsgehäuses größer ist, als der Druck eines fluiden Mediums, welches das Kapselungsgehäuse selbst umschließt. Somit ist zwischen dem Inneren des Kapselungsgehäuses und dem Äußeren des Kapselungsgehäuses eine Druckdifferenz gegeben, wobei im Falle einer Undichtigkeit des Kapselungsgehäuses ein Austreten von dem elektrisch isolierenden Fluid in die Umgebung erfolgt. Dadurch ist eine Verschmutzung des Innern des Kapselungsgehäuses durch nachströmendes Fluid aus der Umgebung des Kapselungsgehäuses zunächst verhindert. Eine Leckage des Kapselungsgehäuses kann bei einer entsprechenden Überwachung des elektrisch isolierenden Fluides rechtzeitig erkannt werden.

Der Strömungskanal ist beispielsweise innerhalb einer der Anschlussleitungen angeordnet, so dass zusätzlicher Bauraum für die Anordnung von separaten Strömungskanälen nicht vorzusehen ist. So kann die erste Anschlussleitung beispielsweise die Form eines Rohres aufweisen, welches derart zu dem Schirmungsgehäuse angeordnet ist, dass eine erste Mündungsöffnung des Strömungskanals innerhalb des Schirmungsgehäuses mündet und das andere Ende des Strömungskanals mit der zweiten Mündungsöffnung außerhalb des Schirmungsgehäuses jedoch innerhalb des Kapselungsgehäuses mündet. Die Anschlussleitung kann beispielsweise einen kreisringförmigen Querschnitt aufweisen und als Prisma ausgestaltet sein. Es kann dabei beispielsweise vorgesehen sein, dass die erste Anschlussleitung dauerhaft elektrisch leitend mit dem Schirmungsgehäuse verbunden ist. Es kann jedoch auch vorgesehen sein, dass das Schirmungsgehäuse elektrisch isoliert zu dem ersten Kapselungsgehäuse angeordnet ist. Besonders vorteilhaft ist dabei, wenn der Strömungskanal derartig weit in das Schirmungsgehäuse ragt, dass die Mündungsöffnung des Strömungskanals über eine Innenwandung des Schirmungsgehäuses hinausragt und Fluid aus einem beabstandet zur Innenwandung des Schirmungsgehäuses befindlichen Zentralbereich einströmen kann. Dazu sollte die Innenwandung des Schirmungsgehäuses verschieden von der Wandung sein, in welcher die erste Mündungsöffnung liegt.

Vorteilhaft ist dabei, wenn die Anschlussleitung durch die Gehäusewandung des Schirmungsgehäuses hindurchtritt, d. h., ein Ansaugen des Fluides in dem Strömungskanal kann einerseits im Innern des Schirmungsgehäuses möglichst beabstandet zu einer Gehäusewandung des Schirmungsgehäuses erfolgen und ebenso kann ein Austreten des Fluides aus dem Strömungskanal beabstandet zu dem Schirmungsgehäuse vorgenommen werden. Damit ist es möglich, unabhängig von der Gestaltung des Schirmungsgehäuses, ein Zirkulieren von elektrisch isolierendem Fluid aus dem Innern des Schirmungsgehäuses in einen entfernten Bereich des Kapselungsgehäuses zu bewirken.

Mit dem Strömungskanal wird eine Möglichkeit geschaffen, Fluid durch eine Wandung des Strömungsgehäuses hindurchtreten zu lassen, ohne dass bei einem Durchtritt eine Kontaktierung des Fluides mit der Gehäusewandung des Schirmungsgehäuses erfolgen muss.

Vorteilhaft ist dabei, wenn eine Hauptachse des Strömungskanals in einer Vertikalen liegt, so dass das im Innern der Unterbrechereinheit erwärmte Fluid konvektionsgetrieben durch den Strömungskanal hindurchtreibt. Der Strömungskanal wirkt dabei nach Art eines Kamins und unterstützt einen Fluidstrom zusätzlich.

Über das Kupplungsstück ist ein Abschluss der ersten Anschlussleitung ermöglicht. Mittels des Kupplungsstückes ist die erste Anschlussleitung und damit die Unterbrechereinheit elektrisch leitend in einen zu trennenden/zu schaltenden Strompfad einkoppelbar. Das Kupplungsstück ist buchsenförmig ausgestaltet, wobei das Kupplungsstück die zweite Mündungsöffnung umschließt und aus der zweiten Mündungsöffnung der Anschlussleitung heraustretendes elektrisch isolierendes Fluid über die radial ausgerichtete Ausnehmung in radialer Richtung umleitet. Die Ausnehmung bzw. die Ausnehmungen können verschiedenste Querschnitte aufweisen, beispielsweise können kreisrunde, ovale, schlitzförmige usw. Querschnitte je nach Bedarf gewählt werden. Somit ist es möglich, die erste Anschlussleitung beispielsweise nach Art eines Rohres auszuformen und zentrisch mit einem Strömungskanal zu versehen. Über das Kupplungsstück kann die erste Anschlussleitung beispielsweise an eine Sammelschiene angekuppelt werden, wobei die Sammelschiene unabhängig von der Ausgestaltung der ersten Anschlussleitung beliebig gestaltet werden kann. Damit ist es möglich, ein erfindungsgemäßes elektrisches Schaltgerät auch in bestehende Anlagen zu integrieren und deren Strombelastbarkeit durch eine verbesserte Durchströmung mit dem Fluid vorteilhaft zu beeinflussen.

Das Kupplungsstück ist buchsenförmig ausgestaltet sein, so dass die erste Anschlussleitung nach Art eines Steckkontaktes in eine Buchsenöffnung des Kupplungsstückes einführbar ist und über diese Steckverbindung eine elektrische Kontaktierung der ersten Anschlussleitung ermöglicht ist. Das Kupplungsstück kann beispielsweise einen mechanisch stabilisierenden Tragkörper aufweisen, in welchen Kontaktelemente eingesetzt sind, um die erste Anschlussleitung elektrisch leitend zu kontaktieren. Beispielsweise können in den Tragkörper als Kontaktelemente Federelemente eingesetzt sein, welche elastisch verformbar auf die erste Anschlussleitung aufpressbar sind. Als Federelemente können beispielsweise federbelastete oder selbstfedernde Kontaktfinger dienen.

Das Kupplungsstück kann beispielsweise derart ausgestaltet sein, dass der Tragkörper rohrartig ausgestaltet ist, wobei jeweils an den Endseiten des rohrförmigen Tragkörpers des Kupplungsstückes Buchsenöffnungen angeordnet sind, in welche die erste Anschlussleitung und ein weiteres Anschlusselement, beispielsweise eine Sammelschiene einführbar sind, wobei eine Überbrückung und elektrische Kontaktierung von der ersten Anschlussleitung mit dem weiteren Anschlusselement über das Kupplungsstück hergestellt ist. Die radial ausgerichtete Ausnehmung des Kupplungsstückes kann beispielsweise von den Kontaktelementen überspannt und zumindest teilweise von diesen verdeckt sein, so dass ein Strom von elektrisch isolierendem Fluid, welcher aus der Mündungsöffnung der ersten Anschlussleitung austritt, vor einem Passieren der radial ausgerichteten Ausnehmung des Kupplungsstückes die/das Kontaktelement(e) umströmt. Somit wird das Kupplungsstück ebenfalls von dem Fluidstrom durchsetzt und damit gekühlt.

Weiterhin kann vorteilhaft vorgesehen sein, dass das Kupplungsstück mehrere radial ausgerichtete Ausnehmungen aufweist, welche axial beabstandet ringförmig umlaufend angeordnet sind.

Eine ringförmige Anordnung mehrerer Ausnehmungen ermöglicht, die aus der ersten Mündungsöffnung austretende Fluidströmung umzulenken und in viele radiale Richtungen ausströmen zu lassen. Somit ist es möglich, eine Vielzahl von für sich querschnittskleinen Ausnehmungen in das Kupplungsstück einzubringen, welche jedoch in der Summe der Ausnehmungen einen ausreichend großen Querschnitt darstellen, um den Strom des Fluids aus dem Kupplungsstück austreten zu lassen. Insbesondere bei einer zumindest teilweisen Abdeckung/Überdeckung von Ausnehmungen kann ein ausreichend großer Querschnitt durch eine Vielzahl von Ausnehmungen zur Verfügung gestellt werden. Vorteilhaft ist es dabei, jeweils mehrere Ausnehmungen auf jeweils mehreren Ringbahnen angeordnet am Umfang des Kupplungsstückes zu verteilen, dadurch ist es möglich, ausreichende Wandstärken an dem Kupplungsstück zur Verfügung zu stellen, um eine hinreichende mechanische Tragfähigkeit der Gesamtanordnung zu gewährleisten. Die Ausnehmungen können auf ihren jeweiligen Ringbahnen vorzugsweise gleichmäßig verteilt angeordnet sein, wobei auf unmittelbar zueinander benachbarten Ringbahnen die Positionen der Ausnehmungen in Umfangsrichtung zueinander versetzt sind. Damit wird eine übermäßige Schwächung der mechanischen Festigkeit des Kupplungsstückes verhindert. Vorteilhafterweise kann dabei vorgesehen sein, dass die Ausnehmungen jeweils nach Art eines Langloches ausgestaltet sind.

Eine weitere vorteilhafte Ausgestaltung kann vorsehen, dass die erste Anschlussleitung durch das Schirmungsgehäuse durchtritt, wobei zwischen der ersten Anschlussleitung und dem Schirmungsgehäuse im Durchtrittsbereich ein Kanal für das Fluid angeordnet ist.

Ein Durchtritt der ersten Anschlussleitung durch das Schirmungsgehäuse ermöglicht es, im Bereich des Durchtrittes der Anschlussleitung einen Kanal für das Fluid auszubilden. Dieser Kanal kann dabei vorteilhaft zum einen von der Anschlussleitung und zum anderen von dem Schirmungsgehäuse selbst begrenzt sein. Vorteilhafterweise sollte der Kanal ein in sich geschlossen um die erste Anschlussleitung umlaufender Kanal sein, vorzugsweise ein ringförmig um die erste Anschlussleitung umlaufender Kanal. Zur Begrenzung des Kanals kann die äußere Mantelfläche der ersten Anschlussleitung herangezogen werden. Durch die Gehäusewandung des Schirmungsgehäuses kann eine weitere den Kanal begrenzende Körperkante gebildet werden. Vorzugsweise kann im Bereich des Durchtrittes der ersten Anschlussleitung zwischen der Anschlussleitung und dem Schirmungsgehäuse ein ringförmiger Kanal angeordnet sein, so dass an dieser Stelle zwischen Schirmungsgehäuse und erster Anschlussleitung keinerlei elektrisch leitende Verbindung vorhanden ist. Somit ist es möglich, dass die erste Anschlussleitung in ihrem Innern zum einen einen Strömungskanal aufweist und zum anderen an ihrem äußeren Umfang im Bereich des Durchtrittes der ersten Anschlussleitung durch das Schirmungsgehäuse von einem zusätzlichen Kanal umgeben ist. Die erste Anschlussleitung kann sowohl außenmantelseitig als auch innenmantelseitig von dem elektrisch isolierenden Fluid beströmt werden. Dadurch wird eine besonders effektive Kühlung hervorgerufen, da im Bereich der Durchtrittsstelle des ersten Anschlussstückes in das Schirmungsgehäuse hinein ein Abströmen von elektrisch isolierendem Fluid ermöglicht ist, welches sich in unmittelbarer Nähe des Durchtrittsbereiches in dem Schirmungsgehäuse befindet. Die erste Anschlussleitung kann zusätzlich aus einem von dem Durchtrittsbereich des Schirmungsgehäuses entfernten Zentralbereich Fluid herausleiten. Damit ist eine verbesserte Durchströmung des Schirmungsgehäuses ermöglicht, wobei eine Ableitung von erwärmten Fluid aus vielen Bereichen des Schirmungsgehäuses ermöglicht ist. Damit sind innerhalb des Schirmungsgehäuses Abschnitte verhindert, in welchen dort befindliches Fluid nur einen geringen Beitrag an einem Wärmeaustausch leistet. Derartige Abschnitte sind nachteilig, da dort auch ein Ansammeln von erwärmtem elektrisch isolierenden Fluid erfolgen kann. Weiterhin ist es vorteilhaft, wenn aus dem Kanal im Durchtrittsbereich ausströmendes Fluid in Richtung des Verlaufes der ersten Anschlussleitung mantelseitig geleitet wird. Aus dem Kanal im Durchtrittsbereich austretendes Fluid kann vorteilhaft in aus den Ausnehmungen des Kupplungsstückes radial austretendes Fluid gelenkt werden. Durch ein Ineinanderlenken der beiden Fluidströme erfolgt ein Durchwirbeln und Vermischen.

Bei dem Ineinanderlenken der beiden Fluidströme wird zusätzlich das die Unterbrechereinheit umgebende elektrisch isolierende Fluid eingemischt, wodurch eine Kühlung des aus der Unterbrechereinheit ausgeleiteten elektrisch isolierenden Fluides unterstützt ist.

Eine weitere vorteilhafte Ausgestaltung kann vorsehen, dass ein Kontaktstück des Schaltgerätes längs einer Verschiebeachse durch eine Gehäusewandung des Schirmungsgehäuses verschiebbar ist, wobei der Strömungskanal aus radialer Richtung zur Verschiebeachse in dem Schirmungsgehäuse mündet.

Zwischen der ersten Anschlussleitung und der zweiten Anschlussleitung der Unterbrechereinheit ist eine elektrische Schaltstelle auszubilden, welche dem Herstellen oder einem Unterbrechen eines Strompfades dient. Dazu kann vorgesehen sein, dass zwischen der ersten und der zweiten Anschlussleitung ein bewegbares Kontaktstück angeordnet ist, welches einen zwischen den beiden Anschlussleitungen liegenden Strompfad herstellen bzw. auftrennen kann. Das Kontaktstück kann beispielsweise derart ausgestaltet sein, dass es längs einer Verschiebeachse verschiebbar ist und bei einem Auftrennen des Strompfades die Schaltstelle von dem elektrisch isolierenden Fluid befüllt werden kann. Durch eine Anordnung der Verschiebeachse quer zum Hauptverlauf des Strömungskanals kann im Bereich der Verchiebeachse, also im Bereich des dort verschiebbaren Kontaktstückes, erhitztes Fluid über den Strömungskanal leicht abgeleitet werden. Beispielsweise kann es bei einem Auftrennen bzw. Herstellen des Strompfades an dem Schaltkontaktstück zu Ausschaltlichtbögen oder Vorüberschlägen kommen, welche mit einer thermischen Belastung des elektrisch isolierenden Fluides und des Kontaktstückes verbunden sind. Durch eine mantelseitige Anordnung der ersten Mündungsöffnung kann das Kontaktstück vor der ersten Mündungsöffnung der ersten Anschlussleitung bewegt werden, so dass trotz einer vergleichsweise kleinen Mündungsöffnung ein großer Bereich des bewegbaren Kontaktstückes vor der Mündungsöffnung entlang bewegt werden. Somit ist eine verbesserte Kühlung des antreibbaren Kontaktstückes, insbesondere während eines Ausschaltvorganges, möglich. Ist die Verschiebeachse nunmehr durch die Gehäusewandung des Schirmungsgehäuses hindurchgeführt, besteht die Möglichkeit, das auf dieser Verschiebebahn geführte Kontaktstück auch durch die Gehäusewandung hindurchtreten zu lassen. Beispielsweise kann vorgesehen sein, dass im ausgeschalteten Zustand das Kontaktstück vollständig innerhalb des Schirmungsgehäuses gelagert ist. Dadurch ist das Kontaktstück dielektrisch geschirmt. Das Kontaktstück kann beispielsweise über eine Gleitkontaktanordnung die innerhalb des Schirmungsgehäuses der Unterbrechereinheit befindlich ist, gelagert, geführt und elektrisch kontaktiert werden. Das längs der Verschiebeachse bewegbare Kontaktstück wird auch als antreibbares Kontaktstück bezeichnet.

Als Gegenkontaktstück weist die Unterbrechereinheit ein ortsfestes Gegenkontaktstück auf, in welches das Kontaktstück einfahrbar ist. Dazu kann das Gegenkontaktstück beispielsweise nach Art einer Buchse ausgestaltet werden, in welche das antreibbare Kontaktstück eingleitet. Zur Schirmung des Gegenkontaktstückes kann dieses von einer Schirmeinheit umgeben sein, welche eine toroidförmige Außenkontur aufweist, wobei an einem auf der von dem antreibbaren Kontaktstück abgewandten Seite befindlichen Sockel ein Ring von Ausnehmungen gebildet ist, durch welche elektrisch isolierendes Fluid auch sockelseitig an das Gegenkontaktstück fließen kann. Über die Ausnehmungen kann das Gegenkontaktstück von einem Fluidstrom durchsetzt werden, wobei zum einen ein Eintreten des Fluides über die Ausnehmungen und ein Austreten des Fluides über die buchsenförmige Öffnung des Gegenkontaktstückes sowie umgekehrt möglich ist. Weiterhin kann es auch vorgesehen sein, dass ein Ein- und Austreten vorzugsweise durch die Ausnehmungen im Sockelbereich des Gegenkontaktstückes erfolgt. Das Gegenkontaktstück kann als zweite Anschlussleitung dienen.

Eine weitere vorteilhafte Ausgestaltung kann vorsehen, dass das elektrische Schaltgerät ein Winkeltrenner ist.

Ein Trenner ist ein elektrisches Schaltgerät, welches zum Öffnen oder Schließen eines Strompfades dient. Trenner sind dabei stets im stromlosen Zustand zu schalten, da mangels Lichtbogenlöscheinrichtungen bis auf Entladungserscheinungen keinerlei Schaltlichtbögen von Trennern beherrscht werden können. Bei einem Winkeltrenner sind die beiden Anschlussleitungen derart zueinander ausgerichtet, dass Hauptachsen der Anschlussleitungen winklig, vorzugsweise in einem rechten Winkel zueinander liegen. Damit ist es zum einen in einfacher Weise möglich, Bewegungen auf das bewegbare Kontaktstück aufzuprägen, beispielsweise durch das Einkoppeln mittels elektrisch isolierender Antriebsstangen. Zum anderen können derartige Winkeltrenner in kompakter Weise in verschiedenen Eckräumen positioniert werden, um eine Isolierstrecke herzustellen.

Dabei kann vorteilhaft vorgesehen sein, dass das Schirmungsgehäuse eine rotationssymmetrische Hüllkontur aufweist, wobei die erste Anschlussleitung an einer ersten Stirnseite angeordnet ist.

Ein Schirmungsgehäuse mit einer rotationssymmetrischen Hüllkontur weist den Vorteil auf, dass die Rotationsachse des Schirmungsgehäuses koaxial zu einer Hauptachse einer der beiden Anschlussleitungen ausgerichtet sein kann, wobei die Hauptachse der anderen Anschlussleitung dazu quer angeordnet ist. So kann es vorteilhaft vorgesehen sein, dass die erste Anschlussleitung an einer ersten Stirnseite des Schirmungsgehäuses befindlich ist, wodurch der Strömungskanal im Wesentlichen im Bereich dieser Stirnseite in das Schirmungsgehäuse eintritt und vorzugsweise im Bereich der ersten Stirnseite mündet.

Eine weitere vorteilhafte Ausgestaltung kann dazu vorsehen, dass das Schirmungsgehäuse eine zweite Stirnseite aufweist und zwischen erster und zweiter Stirnseite ein bezüglich der Stirnseiten radial erweiterter Abschnitt befindlich ist und der radial erweiterte Abschnitt eine Öffnung aufweist, durch welche die Verschiebeachse hindurchtritt.

Eine radiale Erweiterung des Schirmungsgehäuses zwischen den beiden Stirnseiten ermöglicht es, innerhalb des Schirmungsgehäuses ein bewegbares Kontaktstück aufzunehmen und dieses vollständig dielektrisch geschirmt im Innern des Schirmungsgehäuses, beispielsweise in seiner Ausschaltstellung, zu positionieren. Durch eine Öffnung im Mantelbereich des radial erweiterten Abschnittes ist es möglich, dass das bewegbare Kontaktstück aus dem Schirmungsgehäuse heraustritt und in Richtung des ortsfesten Gegenkontaktstückes bewegt wird und mit diesem elektrisch kontaktiert wird.

Es kann vorteilhaft vorgesehen sein, dass von der zweiten Stirnseite zu dem radial erweiterten Abschnitt ein konischer Übergangsabschnitt angeordnet ist, in welchem zumindest eine die Gehäusewandung des Schirmungsgehäuses durchbrechende Ausnehmung angeordnet ist.

Durch eine Anordnung von Ausnehmungen in dem konischen Übergangsabschnitt ist es möglich, elektrisch isolierendes Fluid in das Schirmungsgehäuse ein- bzw. austreten zu lassen. Bei einer Anordnung der ersten Anschlussleitung an der ersten Stirnseite ist es somit möglich, dass über die erste Anschlussleitung elektrisch isolierendes Fluid aus dem Innern des Schirmungsgehäuses hinausgeleitet wird und über die Ausnehmungen in den konischen Übergangsabschnitt elektrisch isolierendes Fluid in das Schirmungsgehäuse eintritt und nachströmt. Damit kann im Innern des Schirmungsgehäuses ein Fluidstrom in eine erste Richtung, d. h. parallel zu einer der Hauptachsen insbesondere vorzugsweise zur Hauptachse der ersten Anschlussleitung, erzeugt werden, wohingegen außenseitig an der Außenmantelfläche des Schirmungsgehäuses aus dem Kanal im Durchtrittsbereich der ersten Anschlussleitung austretendes Fluid sowie aus der zweiten Mündungsöffnung der ersten Anschlussleitung austretendes elektrisch isolierendes Fluid in entgegengesetzter Richtung zurückströmt, so dass das Schirmungsgehäuse innenseitig in einer ersten Richtung von einem Fluidstrom des elektrisch isolierenden Fluides und Außenflächen des Schirmungsgehäuses von einem Fluidstrom in entgegengesetzer zweiter Richtung umströmt werden. Damit wird das Schirmungsgehäuse innenseitig sowie außenseitig gekühlt und im Innern des elektrischen Schaltgerätes eine Durchströmung und Belüftung gefördert.

Im Folgenden wird ein Ausführungsbeispiel der Erfindung schematisch in einer Zeichnung gezeigt und nachfolgend näher beschrieben. Dabei zeigt die
- Figur 1: einen Schnitt durch ein elektrisches Schaltgerät mit einem antreibbaren Kontaktstück in seiner Ausschaltposition, die
- Figur 2: einen Schnitt durch das elektrische Schaltgerät mit dem antreibbaren Kontaktstück in seiner Einschaltposition, die
- Figur 3: mehrere Ansichten einer Schirmeinheit eines Gegenkontaktstückes, die
- Figur 4: eine mantelseitige sowie eine stirnseitige Ansicht eines Kupplungsstückes, die
- Figur 5: einen Schnitt durch das Kupplungsstück, sowie die
- Figur 6: eine alternative Ausgestaltung von Kontaktierungspunkten des Kupplungsstückes.

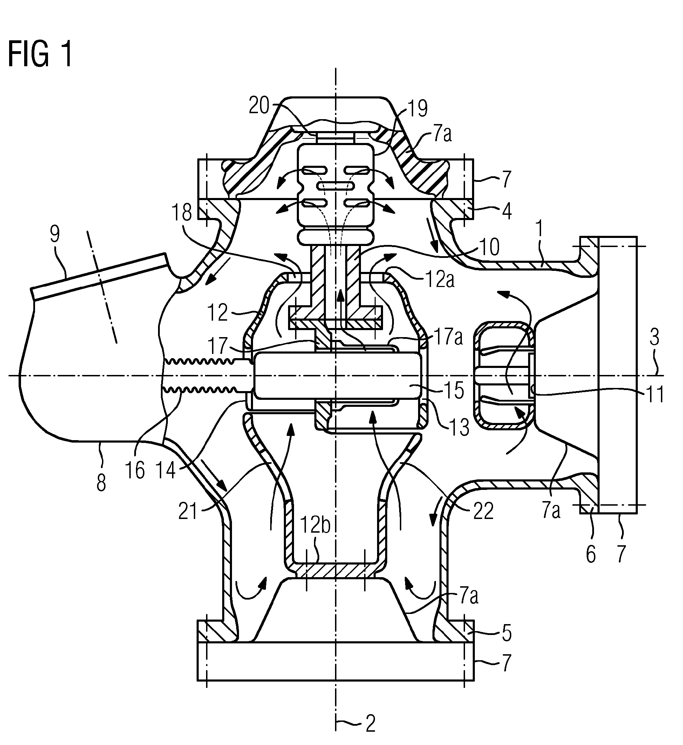

Zunächst wird beispielhaft anhand der Figur 1 der Aufbau eines elektrischen Schaltgerätes beschrieben.

Das elektrische Schaltgerät nach Figur 1 weist ein fluiddichtes Kapselungsgehäuse 1 auf. Das fluiddichte Kapselungsgehäuse 1 ist vorliegend als metallisches Gussgehäuse ausgeformt, wobei das Kapselungsgehäuse 1 eine erste Hauptachse 2 sowie eine zweite Hauptachse 3 aufweist. Die beiden Hauptachsen 2, 3 liegen rechtwinklig zueinander und schneiden einander. An entgegengesetzten Enden der ersten Hauptachse 2 sind ein erster Flansch 4 sowie ein zweiter Flansch 5 des Kapselungsgehäuses 1 angeordnet. An einem ersten Ende der zweiten Hauptachse 3 ist ein dritter Flansch 6 des Kapselungsgehäuses 1 angeordnet. Die drei Flansche 4, 5, 6 weisen ein kreisringförmiges Flanschblatt auf und sind jeweils koaxial zur ersten bzw. zur zweiten Hauptachse 2, 3 ausgerichtet. In den Flanschblättern sind Ausnehmungen eingebracht, über welche die Flansche 4, 5, 6 mit weiteren Baugruppen verschraubt, d. h., verflanscht werden können. Vorliegend ist vorgesehen, dass Scheibenisolatoren 7 an die Flansche 4, 5, 6 angeflanscht werden. Die Scheibenisolatoren 7 weisen jeweils einen elektrisch isolierenden trichterförmigen Isolierkörper 7a auf. Der trichterförmige Isolierkörper 7a ist an seinem äußeren Umfang mit einem mechanisch stabilisierenden Rahmen versehen, durch welchen Befestigungselemente hindurchragen, die in den Ausnehmungen der Flanschblätter der Flansche 4, 5, 6 befestigt sind. Die Scheibenisolatoren 7 verschließen die Flansche 4, 5, 6 fluiddicht, so dass durch die Flansche 4, 5, 6 ein Hindurchtreten von Fluid verhindert ist.

Auf der von dem dritten Flansch 6 abgewandten Seite der zweiten Hauptachse 3 ist das Kapselungsgehäuse 1 mit einem Getriebegehäuse 8 versehen. Das Getriebegehäuse 8 ist einstückig mit dem Kapselungsgehäuse 1 verbunden und weist eine Montageöffnung auf, welches durch eine Montageöffnungsabdeckung 9 fluiddicht verschlossen ist. Über die Montageöffnung kann ein Zugriff in das Innere des Kapselungsgehäuses 1 erfolgen.

Das Innere des Kapselungsgehäuses 1 ist mit einer Unterbrechereinheit versehen, welche eine erste Anschlussleitung 10 sowie eine zweite Anschlussleitung 11 aufweist. Die erste Anschlussleitung 10 ist rohrförmig aufgebaut und koaxial zur ersten Hauptachse 2 ausgerichtet. Die zweite Anschlussleitung 11 schließt sich an ein ortsfestes Gegenkontaktstück an und ist an dem trichterförmigen Isolierkörper 7a des Scheibenisolators 7 des dritten Flansches 6 abgestützt. Die zweite Anschlussleitung 11 ist koaxial zur zweiten Hauptachse 3 ausgerichtet. Die zweite Anschlussleitung 11 ist bolzenförmig ausgestaltet.

Die Unterbrechereinheit weist ein Schirmungsgehäuse 12 auf. Das Schirmungsgehäuse 12 ist mit einer ersten Stirnseite 12a sowie einer zweiten Stirnseite 12b ausgestattet. Das Schirmungsgehäuse 12 ist mit einer im Wesentlichen rotationssymmetrischen Hüllkontur versehen und koaxial zu der ersten Hauptachse 2 ausgerichtet. Das Schirmungsgehäuse 12 ist mit seiner zweiten Stirnseite 12b mit dem trichterförmigen Isolierkörper 7a des Scheibenisolators 7 des zweiten Flansches 5 verbunden und winkelstarr an diesem abgestützt. Über den trichterförmigen Isolierkörper 7a des Scheibenisolators 7 des zweiten Flansches 5 ist das Schirmungsgehäuse 12 an dem Kapselungsgehäuse 1 mechanisch gehaltert und elektrisch isoliert zu diesem positioniert. Zwischen der ersten Stirnseite 12a und der zweiten Stirnseite 12b weist das Schirmungsgehäuse einen radial erweiterten Abschnitt auf. Der radial erweiterte Abschnitt umgibt den Schnittpunkt der beiden Hauptachsen 2, 3. Der radial erweitere Abschnitt ist im Bereich der zweiten Hauptachse 3 von einer ersten Ausnehmung 13 sowie einer zweiten Ausnehmung 14 durchsetzt. Die Ausnehmungen 13, 14 sind im Wesentlichen axial hintereinander liegend ausgestaltet, wobei die zweite Hauptachse 3 durch die beiden Ausnehmungen 13, 14 hindurch verläuft. Die zweite Hauptachse 3 definiert eine Verschiebeachse eines antreibbaren Kontaktstückes 15. Das antreibbare Kontaktstück 15 ist mit einem ersten Ende der zweiten Anschlussleitung 11 zugewandt. An seinem zweiten von dem ersten Ende abgewandten Ende ist eine elektrisch isolierende Antriebsstange 16 angekoppelt. Die Antriebsstange 16 ragt in das Getriebegehäuse 8 hinein. Im Getriebegehäuse 8 ist ein Umlenkgetriebe angeordnet, welches eine Bewegung fluiddicht in das Innere des Kapselungsgehäuses 1 einkoppelt, so dass die Antriebsstange 16 eine Bewegung des antreibbaren Kontaktstückes 15 längs der zweiten Hauptachse 3 hervorrufen kann.

Im Innern des Schirmungsgehäuses 12 ist das antreibbare Kontaktstück einer Gleitkontaktanordnung 17 gelagert. Die Gleitkontaktanordnung 17 ist innerhalb des Schirmungsgehäuses 12 an diesem abgesützt. Die Gleitkontaktanordnung 17 weist eine Vielzahl von radial um die zweite Hauptachse 3 verteilte Kontaktfinger auf, welche an einer Mantelfläche des antreibbaren Kontaktstückes 15 anliegen. Die bewegbaren Kontaktfinger der Gleitkontaktanordnung 17 sind elektrisch leitend mit der ersten Anschlussleitung 10 verbunden. Die elektrische Gleitkontaktanordnung 17 ist dabei derart mit der ersten Anschlussleitung 10 verbunden, dass eine erste Mündungsöffnung radial zur Verschiebeachse angeordnet ist, so dass der Strömungskanal quer zur Verschiebeachse des bewegbaren Kontaktstückes 15 verläuft. Das antreibbare Kontaktstück 15 wird vor der ersten Mündungsöffnung vorbeigeführt.

Die Gleitkontaktanordnung 17 ist elektrisch leitend mit dem Schirmungsgehäuse 12 kontaktiert. Somit ist ausgehend von der ersten Anschlussleitung 10 über die Gleitkontaktanordnung 17 das elektrische Potential der ersten Anschlussleitung 10 auf das Schirmungsgehäuse 12 übertragen. Die elektrisch leitenden Verbindungen von der ersten Anschlussleitung 10 mit der Gleitkontaktanordnung 17 sowie von dem Schirmungsgehäuse 12 mit der Gleitkontaktanordnung 17 bestehen dabei unabhängig vom Schaltzustand des elektrischen Schaltgerätes bzw. der Lage des antreibbaren Kontaktstückes 15.

Vorliegend sind die elektrisch leitenden Verbindungen zwischen der ersten Anschlussleitung 10 über die Gleitkontaktanordnung 17 und dem Schirmungsgehäuse 12 als Strompfad ausgeführt, so dass ein dauerhafter Strompfad zwischen den trichterförmigen Isolierkörpern 7a zwischen erstem Flansch 4 und zweitem Flansch 5 gegeben ist. Dieser Strompfad kann sich über weitere Bauteile auch durch die trichterförmigen Isolierkörper 7a hindurch erstrecken.

Über das schaltbare Kontaktstück 15 ist ein Abzweig von dem dauerhaft zwischen den ersten Flansch 4 und dem zweiten Flansch 5 verlaufenden Strompfad schaltbar.

Die erste Anschlussleitung 10 durchsetzt das Schirmungsgehäuse 12, wobei das Schirmungsgehäuse 12 im Durchtrittsbereich des ersten Anschlussstückes 10 einen Kanal 18 begrenzt, welcher die erste Anschlussleitung 10 ringförmig umgibt. Die erste Anschlussleitung 10 ist innerhalb des Schirmungsgehäuses 12 an der Gleitkontaktanordnung abgestützt. Die erste Anschlussleitung 10 ist außerhalb des Schirmungsgehäuses 12 von einem Kupplungsstück 19 umgeben. Die erste Anschlussleitung 10 endet mit seiner zweiten Mündungsöffnung innerhalb des Kupplungsstückes 19. Das Kupplungsstück 19 stellt eine elektrisch leitende Verbindung zwischen der ersten Anschlussleitung 10 und einem in den trichterförmigen Isolierkörper 7a des Scheibenisolators 7 des ersten Flansches 4 eingelassenes weiteren Anschlusselement 20 dar.

Mittels des antreibbaren Kontaktstückes 15 ist zwischen der ersten Anschlussleitung 10 und der zweiten Anschlussleitung 11 ein Strompfad herstellbar bzw. ein Strompfad unterbrechbar. In der Figur 1 ist die "Offen" Position des elektrischen Schaltgerätes abgebildet, d. h., zwischen der ersten Anschlussleitung 10 und der zweiten Anschlussleitung 11 ist ein elektrisch isolierender Abschnitt befindlich. Dieser elektrisch isolierende Abschnitt wird auch Schaltstrecke oder Schaltstelle genannt. Da das Innere des Kapselungsgehäuses 1 mit einem elektrisch isolierenden Fluid befüllt ist, ist auch die Schaltstrecke elektrisch isolierend befüllt, so dass zwischen der ersten Anschlussleitung 10 und der zweiten Anschlussleitung 11 ein elektrischer Strompfad unterbrochen ist.

Das Schirmungsgehäuse 12 weist einen konischen Übergangsbereich auf, an welchem ausgehend von der zweiten Stirnseite 12b ein kontinuierlicher Übergang in den radial erweiterten Bereich des Schirmungsgehäuses 12 gegeben ist. Im Bereich des konischen Überganges sind in die Wandung des Schirmungsgehäuses 12 Ausnehmungen 21, 22 eingebracht. Über die Ausnehmungen 21, 22 kann das elektrisch isolierende Fluid in das Innere des Schirmungsgehäuses 12 der Unterbrechereinheit des elektrischen Schaltgerätes einströmen. Ein Ausströmen von elektrisch isolierendem Fluid aus dem Inneren des Schirmungsgehäuses 12 ist beispielsweise über den Kanal 18 im Bereich des Durchtrittes der ersten Anschlussleitung 10 in das Schirmungsgehäuse 12 ermöglicht. Weiterhin ist ein Austritt von elektrisch isolierendem Fluid über den innerhalb der ersten Anschlussleitung 10 befindlichen Strömungskanal gegeben. Der Strömungskanal der ersten Anschlussleitung 10 mündet mit der ersten Mündungsöffnung innerhalb des Schirmungsgehäuses 12. Eine zweite Mündungsöffnung ist am anderen Ende der Anschlussleitung 10 vorgesehen, welche von dem Kupplungsstück 19 umgeben ist. Der Strömungskanal ermöglicht ein Eintreten von elektrisch isolierendem Fluid über seine erste Mündungsöffnung im Innern des Schirmungsgehäuses 12 und ein Austreten von elektrisch isolierendem Fluid über die zweite Mündungsöffnung innerhalb des Kupplungsstückes 19. Die beiden Mündungsöffnungen sind koaxial zur ersten Hauptachse 2 ausgerichtet und jeweils stirnseitig in der ersten Anschlussleitung 10 angeordnet.

Das Kupplungsstück 19 weist mehrere radiale Ausnehmungen auf, welche auf mehreren Ringbahnen verteilt mantelseitig eingelassen sind. Dadurch wird der Fluidstrom des Strömungskanals der ersten Anschlussleitung 10 nach einem Austritt aus der zweiten Mündungsöffnung radial umgeleitet und in den Bereich des Kapselungsgehäuses 1 geleitet, welcher das Schirmungsgehäuse 12 umgibt. Aus dem Kanal 18 austretendes Fluid vermischt sich in diesem Bereich mit dem aus den Ausnehmungen des Kupplungsstückes 19 austretenden Fluid. Aufgrund des vergrößerten Volumens und einer Durchmischung kann eine Abkühlung und Entspannung des aus der Unterbrechereinheit ausgeleiteten Fluides erfolgen. Das Fluid bewegt sich nach einem Austritt nach außerhalb des Schirmungsgehäuses 12 längs der ersten Hauptachse 2 zurück und fällt in Richtung des zweiten Flansches 5 und kann über die Ausnehmungen 21, 22 wiederum in das Innere des Schirmungsgehäuses 12 eintreten. Dieser Kreislauf wird vor allem durch Temperaturunterschiede getrieben. Aufgrund des so erzeugten Soges kann abgekühltes elektrisch isolierendes Fluid aus dem Kapselungsgehäuse 1 über die Ausnehmungen 21, 22 in das Innere des Schirmungsgehäuses 12 nachströmen.

In der Figur 1 ist die Ausschaltstellung des elektrischen Schaltgerätes gezeigt.

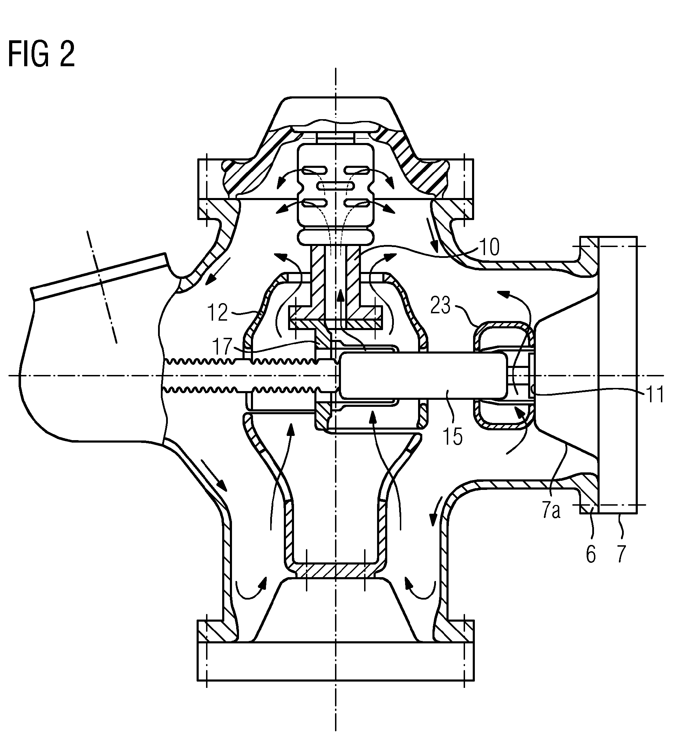

Die Figur 2 zeigt nunmehr das bewegbare, antreibbare Kontaktstück 15 in seiner Einschaltstellung, d. h., zwischen der ersten Anschlussleitung 10 und der zweiten Anschlussleitung 11 des elektrischen Schaltgerätes ist ein elektrischer Strompfad ausgebildet und ein elektrischer Strom kann von der ersten Anschlussleitung 10 über die Gleitkontaktanordnung 17 und das antreibbare Kontaktstück 15 auf die zweite Anschlussleitung 11 fließen. Zwischen den beiden Anschlussleitungen 10, 11 ist somit ein Stromfluss ermöglicht. Aufgrund des Stromflusses werden die beteiligten elektrischen Leiter erwärmt. So wird auch der Bereich des antreibbaren Kontaktstückes 15 erwärmt, welcher auch im eingeschalteten Zustand innerhalb des Schirmungsgehäuses 12 verbleibt. Insbesondere im Bereich der Gleitkontaktanordnung 17 ist ein erhöhter Übergangswiderstand nicht vermeidbar, so dass dort eine Erwärmung entsteht, welche das elektrisch isolierende Fluid innerhalb des Schirmungsgehäuses 12 erwärmt. Getrieben durch diese Erwärmung erfolgt eine konvektorische Strömung durch den Strömungskanal der ersten Anschlussleitung 10 sowie durch den Kanal 18 am Umfang der ersten Anschlussleitung 10.

Über den im Strömungskanal der ersten Anschlussleitung 10 hervorgerufenen Fluidstrom ist eine verbesserte Kühlung der innerhalb des Schirmungsgehäuses 12 befindlichen stromführenden Elemente gegeben.

Um eine zusätzliche Kühlung zu bewirken, kann vorgesehen sein, dass die zweite Anschlussleitung 11 von einer Schirmeinheit 23 umgeben ist. Die Schirmeinheit 23 umgibt das Gegenkontaktstück der zweiten Anschlussleitung 11 nach Art eines Schirmringes, wobei dieser Schirmring von dem trichterförmigen Isolierkörper 7a des Scheibenisolators 7 des dritten Flansches 6 getragen ist. An seinem Befestigungsbereich ist die Schirmeinheit 23 von Ausnehmungen durchsetzt, welche die Ringstruktur durchbrechen, so dass auch im Einschaltzustand des antreibbaren Kontaktstückes 15, wie in der Figur 2 gezeigt, eine ausreichende Durchströmung der Schirmeinheit 23 mit einem elektrisch isolierenden Fluid ermöglicht ist.

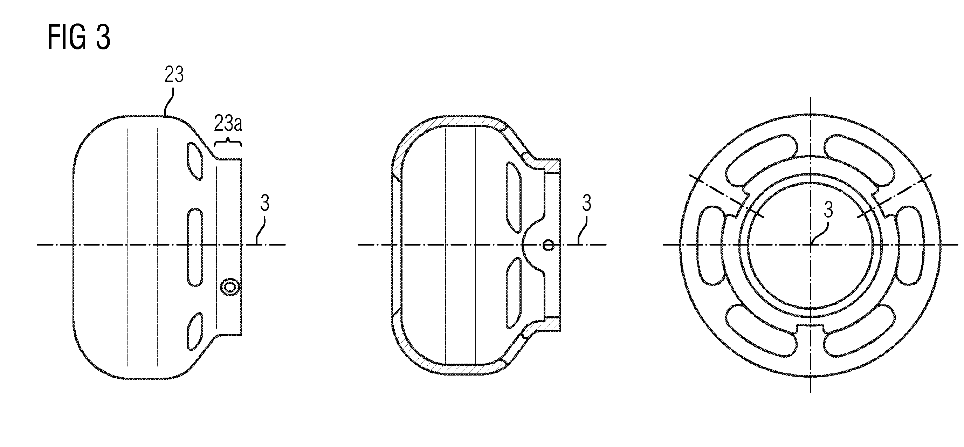

In der Figur 3 ist die Schirmeinheit 23 in einer Seitenansicht abgebildet. Die Schirmeinheit 23 weist einen Sockel 23a auf, mit welchem die Schirmeinheit 23 an der zweiten Anschlussleitung 11 befestigbar ist. Die Schirmeinheit 23 weist das gleiche elektrische Potential auf, wie die zweite Anschlussleitung 11. Die Schirmeinheit 23 ist mit einer im Wesentlichen toroidförmigen Außenstruktur versehen, um die im Innern befindlichen Bereiche dielektrisch zu schirmen. An ihrem dem Sockel 23a zugewandten Ende ist die Schirmeinheit 23 von einer Vielzahl von Ausnehmungen durchbrochen, welche ringförmig im Bereich des Überganges zu dem Sockel 23a angeordnet sind. In der Figur 3 ist dazu ein Querschnitt durch die Schirmeinheit 23 dargestellt. Weiterhin ist in der Figur 3 eine Sicht auf den Sockel 23a in Richtung der zweiten Hauptachse 3 dargestellt.

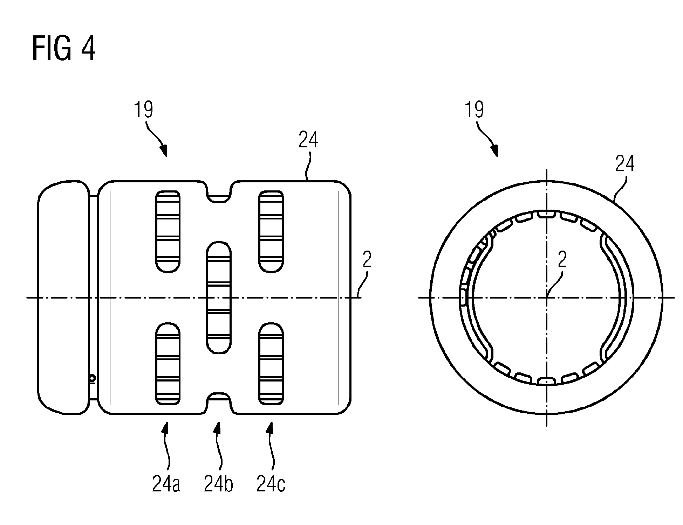

In der Figur 4 ist zur näheren Beschreibung des Kupplungsstückes 19 eine Seitenansicht sowie eine stirnseitige Ansicht abgebildet. Das Kupplungsstück 19 weist einen mechanisch tragenden Grundkörper 24 auf, welcher von mehreren Ausnehmungen durchsetzt ist. Die Ausnehmungen in dem Grundkörper 24 sind auf einer ersten Ringbahn 24a, einer zweiten Ringbahn 24b sowie einer dritten Ringbahn 24c umlaufend angeordnet. Die Ausnehmungen in dem Grundkörper 24 sind jeweils als Langlöcher gestaltet. Die Ausnehmungen in dem Grundkörper 24 sind von innerhalb des Grundkörpers 24 angeordneten Kontaktelementen 25 überdeckt. Die Kontaktelemente 25 verdecken dabei Ausnehmungen in dem Grundkörper 24 zumindest teilweise.

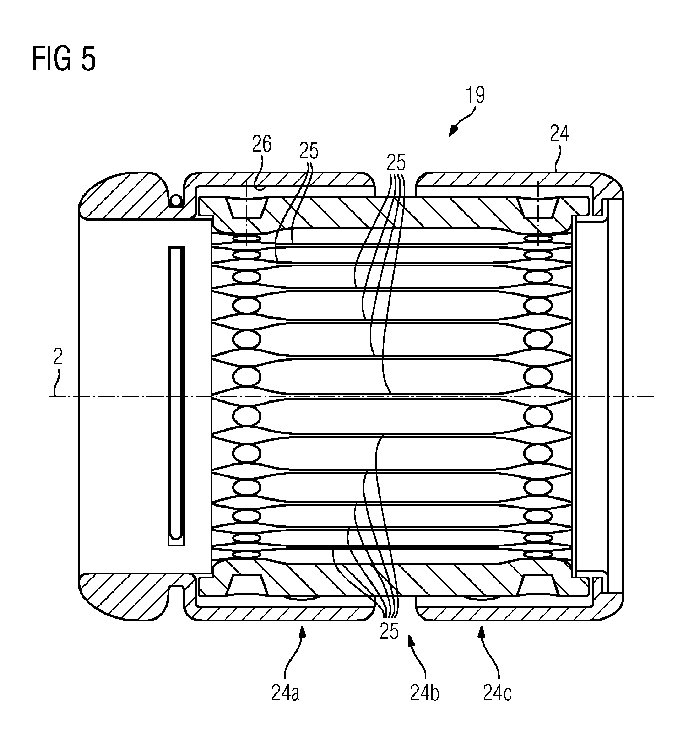

In der Figur 5 ist ein Schnitt durch das aus den Figuren 1, 2 und 4 bekannte Kupplungsstück 19 dargestellt. In den rotationssymmetrisch aufgebauten Grundkörper 24 sind in eine umlaufende Ausnehmung 26 Kontaktelemente 25 eingelegt. Die Kontaktelemente 25 bilden einen umlaufenden Käfig, wobei jeweils endseitig Kontaktierungspunkte vorgesehen sind. Die Kontaktierungspunkte sind buchsenförmig angeordnet, so dass entsprechend gegengleiche Anschlussstücke zur elektrischen Kontaktierung einführbar sind. So ist beispielsweise eine erste Anschlussleitung 10 in eine Buchse des Kupplungsstückes 19 einfahrbar. In eine weitere Buchse des Kupplungsstückes 19 ist beispielsweise ein weiteres Anschlusselement 20 einfahrbar. Über die Kontaktierungselemente 25 sind die beiden koaxial ausgerichteten ersten Anschlussleitungen 10 und das weitere Anschlusselement 20 elektrisch leitend kontaktiert.

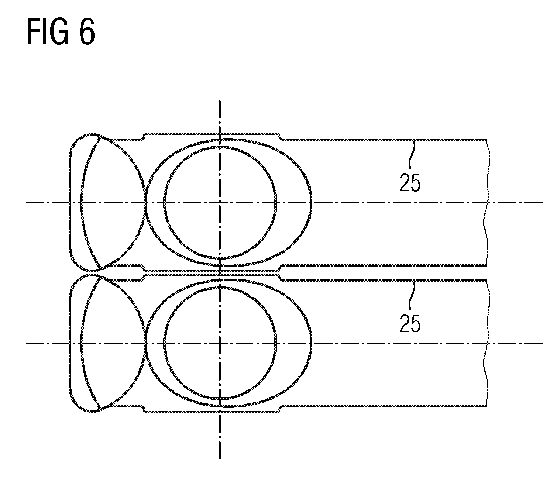

Die Figur 6 zeigt eine alternative Ausgestaltungsvariante der Ausgestaltung von Kontaktierungspunkten der Kontaktelemente 25. Die Kontaktelemente 25 sind an einander zugewandten Körperkanten mit Ausnehmungen versehen, so dass zwischen den Kontaktelementen 25 Öffnungen zum Durchtritt von Fluid gebildet sind. Im Bereich der Kontaktierungspunkte berühren benachbarte Kontaktierungspunkte 25 einander, so dass die Position der Kontaktelemente 25 untereinander festgelegt ist.

## Patentansprüche

1. Elektrisches Schaltgerät mit einer eine erste Anschlussleitung (10)und eine zweite Anschlussleitung (11) aufweisenden Unterbrechereinheit und mit einem fluiddichten Kapselungsgehäuse (1), welches die Unterbrechereinheit umgibt und mit einem elektrisch isolierenden Fluid befüllt ist, sowie mit einem die Unterbrechereinheit zumindest teilweise umgebenden Schirmungsgehäuse (12), wobei
die erste Anschlussleitung (10) zumindest einen Strömungskanal für das Fluid aufweist, welcher mit einer ersten Mündungsöffnung innerhalb des Schirmungsgehäuses (12) mündet und mit einer zweiten Mündungsöffnung außerhalb des Schirmungsgehäuses (12) mündet,
**dadurch gekennzeichnet, dass** die erste Anschlussleitung (10) an einem buchsenförmigen Kupplungsstück (19) endet, welches zumindest eine radial ausgerichtete Ausnehmung aufweist, wobei die erste Anschlussleitung (10) nach Art eines Steckkontaktes in eine Buchsenöffnung des Kupplungsstückes (19) eingeführt ist.

2. Elektrisches Schaltgerät nach Anspruch 1,
**dadurch gekennzeichnet, dass** das Kupplungsstück (19)mehrere radial ausgerichtete Ausnehmungen aufweist, welche axial beabstandet ringförmig umlaufend angeordnet sind.

3. Elektrisches Schaltgerät nach einem der Ansprüche 1 bis 2, **dadurch gekennzeichnet, dass** die erste Anschlussleitung (10) durch das Schirmungsgehäuse (12) durchtritt, wobei zwischen der ersten Anschlussleitung (10) und dem Schirmungsgehäuse (12) im Durchtrittsbereich ein Kanal für das Fluid angeordnet ist.

4. Elektrisches Schaltgerät nach einem der Ansprüche 1 bis 3, **dadurch gekennzeichnet, dass** ein Kontaktstück (15) des Schaltgerätes längs einer Verschiebeachse durch eine Gehäusewandung des Schirmungsgehäuses (12) verschiebbar ist, wobei der Strömungskanal aus radialer Richtung zur Verschiebeachse in dem Schirmungsgehäuse mündet.

5. Elektrisches Schaltgerät nach einem der Ansprüche 1 bis 4, **dadurch gekennzeichnet, dass** das elektrische Schaltgerät ein Winkeltrenner ist.

6. Elektrisches Schaltgerät nach einem der Ansprüche 1 bis 5, **dadurch gekennzeichnet, dass** das Schirmungsgehäuse (12) eine rotationssymmetrische Hüllkontur aufweist, wobei die erste Anschlussleitung (10) an einer ersten Stirnseite (12a) angeordnet ist.

7. Elektrisches Schaltgerät nach Anspruch 6,
**dadurch gekennzeichnet, dass** das Schirmungsgehäuse (12) eine zweite Stirnseite (12b) aufweist und zwischen erster und zweiter Stirnseite (12a, 12b) ein bezüglich der Stirnseiten (12a, 12b) radial erweiterter Abschnitt befindlich ist und der radial erweiterte Abschnitt eine Öffnung (13) aufweist, durch welche die Verschiebeachse hindurchtritt.

8. Elektrisches Schaltgerät nach Anspruch 6 oder 7,
**dadurch gekennzeichnet, dass** von der zweiten Stirnseite (12b) zu dem radial erweiterten Abschnitt ein konischer Übergangsabschnitt angeordnet ist, in welchem zumindest eine die Gehäusewandung des Schirmungsgehäuses (12) durchbrechende Ausnehmung (21, 22) angeordnet ist.

## Claims

1. Electrical switching device having an interrupter unit, which has a first connecting line (10) and a second connecting line (11), and having a fluid-tight encapsulating housing (1), which surrounds the interrupter unit and is filled with an electrically insulating fluid, and having a shielding housing (12) which at least partially surrounds the interrupter unit,
wherein
the first connecting line (10) has at least one flow channel for the fluid, which flow channel opens with a first mouth opening within the shielding housing (12) and opens with a second mouth opening outside the shielding housing (12),
**characterized in that**
the first connecting line (10) ends at a coupling piece in the form of a socket, which coupling piece has at least one radially aligned recess, wherein the first connecting line (10) is inserted into a socket opening in the coupling piece (19) in the form of a plug-in contact.

2. Electrical switching device according to Claim 1, **characterized in that**
the coupling piece (19) has a plurality of radially aligned recesses which are arranged in an annular shape circumferentially, separated axially.

3. Electrical switching device according to one of Claims 1 to 2,
**characterized in that**
the first connecting line (10) passes through the shielding housing (12), wherein a channel for the fluid is arranged in the passage area between the first connecting line (10) and the shielding housing (12).

4. Electrical switching device according to one of Claims 1 to 3,
**characterized in that**
a contact piece (15) of the switching device can be moved along a movement axis through a housing wall of the shielding housing (12), wherein the flow channel opens in the shielding housing from the radial direction with respect to the movement axis.

5. Electrical switching device according to one of Claims 1 to 4,
**characterized in that**
the electrical switching device is a right-angle disconnector.

6. Electrical switching device according to one of Claims 1 to 5,
**characterized in that**
the shielding housing (12) has a rotationally symmetrical envelope contour, wherein the first connecting line (10) is arranged on a first end face (12a).

7. Electrical switching device according to Claim 6,
**characterized in that**
the shielding housing (12) has a second end face (12b), and a section which widens radially with respect to the end faces (12a, 12b) is located between the first and the second end face (12a, 12b), and the radially widened section has an opening (13) through which the movement axis passes.

8. Electrical switching device according to Claim 6 or 7,
**characterized in that**
a conical transition section is arranged from the second end face (12b) to the radially widened section, in which at least one recess (21, 22) is arranged, which passes through the housing wall of the shielding housing (12).

## Revendications

1. Appareil de commutation électrique, comprenant une unité d'interruption ayant une première ligne ( 10 ) de raccordement et une deuxième ligne ( 11 ) de raccordement et ayant un boîtier ( 1 ) de blindage étanche au fluide, qui entoure l'unité d'interruption et qui est rempli d'un fluide isolant du point de vue électrique, ainsi que comprenant un boîtier ( 12 ) d'écran entourant au moins en partie l'unité d'interruption, dans lequel
la première ligne ( 10 ) de raccordement a au moins un conduit d'écoulement du fluide, qui débouche par une première embouchure à l'intérieur du boîtier ( 12 ) d'écran et par une deuxième embouchure à l'extérieur du boîtier ( 12 ) d'écran, **caractérisé en ce que**
la première ligne ( 10 ) de raccordement se termine sur une pièce ( 19 ) d'accouplement en forme de douille, qui a au moins un évidement dirigé radialement, la première ligne ( 10 ) de raccordement étant introduite à la manière d'un contact à fiche dans une ouverture de douille de la pièce ( 19 ) d'accouplement.

2. Appareil de commutation électrique suivant la revendication 1,
**caractérisé en ce que** la pièce ( 19 ) d'accouplement a plusieurs évidements dirigés radialement qui sont disposés tout autour annulairement à distance axialement.

3. Appareil de commutation électrique suivant l'une des revendication 1 à 2,
**caractérisé en ce que**
la première ligne ( 10 ) de raccordement passe à travers le boîtier ( 12 ) d'écran, un conduit pour le fluide étant disposé entre la première ligne ( 10 ) de raccordement et le boîtier ( 12 ) d'écran.

4. Appareil de commutation électrique suivant l'une des revendications 1 à 3,
**caractérisé en ce qu'**
une pièce ( 15 ) de contact de l'appareil de commutation peut coulisser le long d'un axe de coulissement à travers une paroi du boîtier ( 12 ) d'écran, le conduit d'écoulement débouchant dans le boîtier d'écran dans une direction radiale par rapport à l'axe de coulissement.

5. Appareil de commutation électrique suivant l'une des revendications 1 à 4,
**caractérisé en ce que**
l'appareil de commutation électrique est un séparateur coudé.

6. Appareil de commutation électrique suivant l'une des revendications 1 à 5,
**caractérisé en ce que**
le boîtier ( 12 ) d'écran a un contour d'enveloppe de révolution, la première ligne ( 10 ) de raccordement étant disposée sur un côté ( 12a ) frontal.

7. Appareil de commutation électrique suivant la revendication 6,
**caractérisé en ce que**
le boîtier ( 12 ) d'écran a un deuxième côté ( 12b ) frontal et une partie, s'élargissant radialement par rapport aux côtés
( 12a, 12b ) frontaux, entre le premier ( 12a ) frontal et le deuxième côté ( 12b ) frontal et la partie s'élargissant radialement a une ouverture ( 13 ), dans laquelle passe l'axe de coulissement.

8. Appareil de commutation électrique suivant la revendication 6 ou 7,
**caractérisé en ce que**
il y a du deuxième côté ( 12b ) frontal à la partie s'élargissant radialement une partie de transition conique, dans laquelle est ménagé au moins un évidement ( 21, 22 ) traversant la paroi du boîtier ( 12 ) d'écran.
